# EUROPEAN PATENT SPECIFICATION

(11) **EP 1 514 752 B1**
(45) Date of publication and mention of the grant of the patent: **20.06.2007**
(21) Application number: 03103349.1
(22) Date of filing: 11.09.2003
(51) Int. Cl.: B60S 1/38, B60S 1/34

(54) **A windscreen wiper arm**
Scheibenwischerarm
Bras d'essuie-glace

(43) Date of publication of application: 16.03.2005
(73) Proprietor: Federal-Mogul S.A., 6790 Aubange (BE)
(72) Inventor: Gilli, Marco, 6790 Aubange (BE)
(74) Representative: Hooiveld, Arjen Jan Winfried

(56) References cited:
- EP-A- 0 334 755
- EP-A- 0 755 833
- DE-A- 3 433 106
- DE-A- 19 951 440
- US-A- 5 222 274

## Description

The present invention relates to a windscreen wiper arm, particularly for automobiles, comprising a mounting head mountable on a drive shaft and an arm member pivotally connected to the mounting head by means of a pivot pin, wherein the arm member has a substantially U-shaped cross-section near said pivot pin comprising two side walls, wherein a part of the mounting head extends between the side walls and beyond said pivot pin.

Such a windscreen wiper arm is known from European patent publication no. 0 755 833 (Valeo Systèmes d'Essuyage). The windscreen wiper arm and the mounting head described in this European patent document are equipped with complementary stop surfaces cooperating together in order to limit a pivot angle of the windscreen wiper arm. More in particular, a pivot movement of the known windscreen wiper arm relative to the known mounting head in a direction away from a windscreen to be wiped, is blocked beyond a certain maximum pivot angle, with the help of a protrusion on the windscreen wiper arm stopped by a stop surface on the mounting head.

A disadvantage of the windscreen wiper arm known from the above European patent publication is that, due to the fact that many cars have their own specifications as to a maximun pivot angle referred to above, for those cars a specific windscreen wiper arm and mounting head has to be designed and manufactured. Obviously, this needs complex machinery, tools, with all the expenses involved.

It is an object of the invention to obviate this disadvantage, in the sense that at minimum costs - without using complex machinery and additional tools - windscreen wiper arms with mutually minimum modifications are proposed, which can be mounted on different cars. It is noted that the present invention is not restricted to cars, but also refers to rail coaches and other (fast) vehicles.

Thereto, according to the invention a windshield wiper arm mentioned in the preamble is characterized in that protrusion/groove means are provided on said part and said side walls for limiting a pivot angle of the arm member, wherein the protrusion/groove means comprise at least one curved guiding groove and at least one protrusion cooperating with said groove. Particularly, said protrusion is movable in said groove between a first position corresponding with a wiping position of the arm member and a second position corresponding with a mounting position of the wiping arm. This enables to mount windscreen wiper arms mutually only differing in the sense that only the shape (particularly the effective length) of the groove is modified by using a small modification in the respective mould, on every type of car.

In a preferred embodiment of a windscreen wiper device in accordance with the invention said part is provided with opposite abutting surfaces for abutting against the side walls, wherein said protrusion extends laterally inwardly from one of the side walls into said groove being provided on one of the abutting surfaces abutting against that respective side wall. In the alternative, said part is provided with opposite abutting surfaces for abutting against the side walls, wherein said protrusion extends laterally outwardly from one of the abutting surfaces into said groove being provided on one of the side walls abutting against that respective abutting surface.

In another preferred embodiment of a windscreen wiper device according to the invention said groove extends along a part of a circle.

In another preferred embodiment of a windscreen wiper device in accordance with the invention the arm member is made of a plastic material. Preferably, also the mounting head is made of a plastic material.

The invention also relates to a windscreen wiper device comprising a windscreen wiper arm in accordance with the invention. Particularly, said windscreen wiper device comprises an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respectve connecting piece, which windscreen wiper device comprises a connecting device for the windscreen wiper arm in accordance with the invention. Such a windscreen wiper device is thus designed as a "yokeless" wiper device, wherein use is no longer made of several yokes pivotally connected to each other, but wherein the wiper blade is biassed by the carrier element, as a result of which it exhibits a specific curvature. The present windscreen wiper arm may comprise a pivot pin on one side thereof, which is inserted sideways into a through hole of the connecting device. It is noted that the present invention is not restricted to such a "yokeless blade", although being advantegeous therein, but also extends to other types of windscreen wiper devices, such as the ones with yokes as referred to above.

Finally, the invention also refers to a method for manufacturing a windscreen wiper arm, particularly for automobiles, comprising a mounting head mountable on a drive shaft and an arm member pivotally connected to the mounting head by means of a pivot pin, wherein the arm member has a substantially U-shaped cross-section near said pivot pin comprising two side walls, wherein a part of the mounting head extends between the side walls and beyond said pivot pin, charaterized in that protrusion/groove means are provided on said part and said side walls for limiting a pivot angle of the arm member, wherein the protrusion/groove means are provided with at least one curved guiding groove and at least one protrusion cooperating with said groove.

The invention will now be explaine in more detail with reference to figures illustrated in a drawing, wherein:
- Figure 1 is a perspective, schematic view of a preferred embodiment of a windscreen wiper device equipped with a windscreen wiper arm according to the invention, wherein the windscreen wiper arm is in a wiping position;
- Figures 2 through 7 show details of the windscreen wiper device of Figure 1;
- Figure 8 is a bottom view of the windscreen wiper arm of Figure 1;
- Figure 9 corresponds to Figure 1, with the difference that the windscreen wiper arm is now in a mounting position; and
- Figures 10 and 11 are details of Figure 9 according to different embodiments.

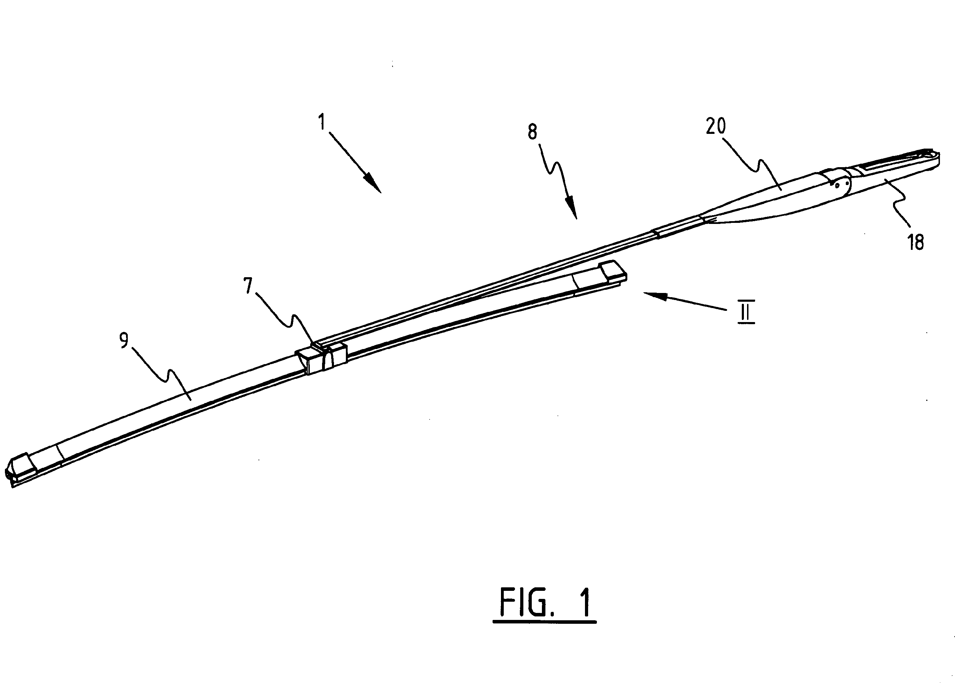

Figure 1 through 7 show a preferred variant of a windscreen wiper device 1 according to the invention. Said windscreen wiper device is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biassed in a curved position (the curvature in operative position being that of a windscreen to be wiped). Neighbouring ends 5 of strips 4 are interconnected on either side of the windscreen wiper device 1 by means of connecting pieces 6. The windscreen wiper device 1 is further equipped with a connecting device 7 for an oscillating arm 8, and a spoiler 9.

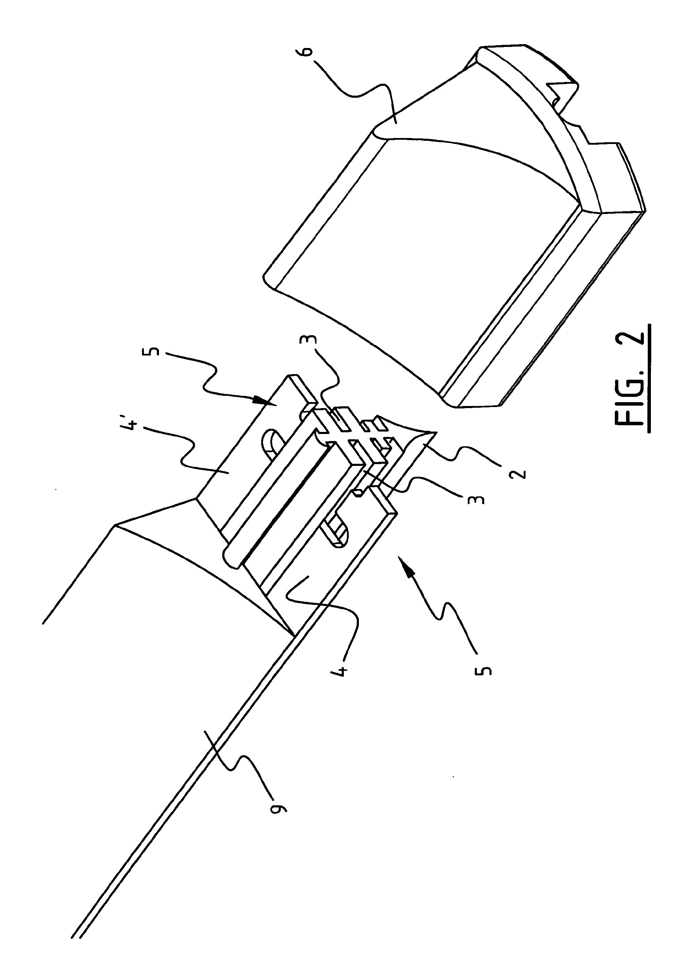

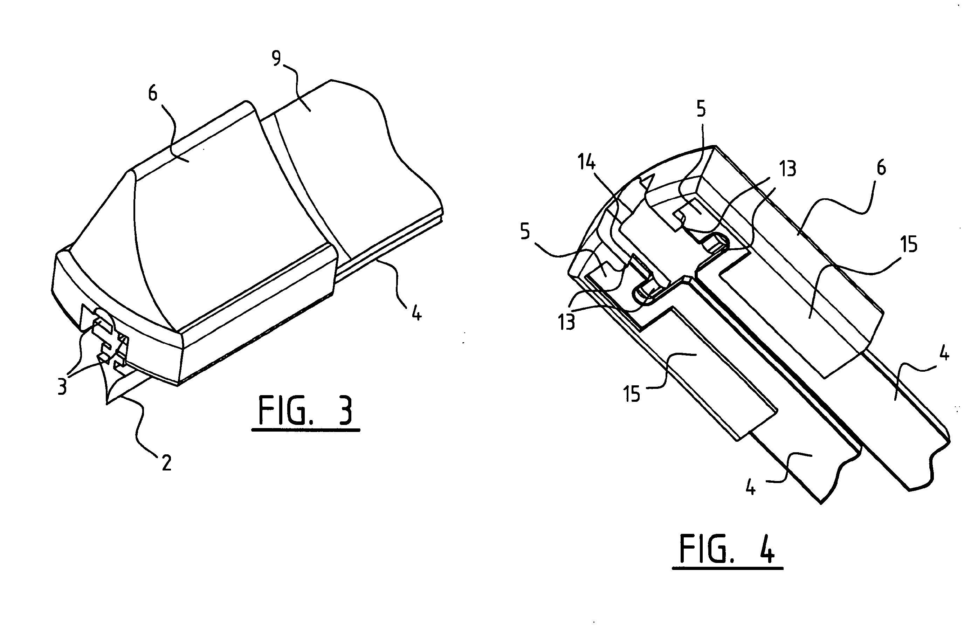

Figure 2 and 3 show a free end of the windscreen wiper device 1 of figure 1, whereas figure 4 reveals a bottom view of said free end without the wiper blade 2 being present. Corresponding parts have been designated with the same reference numerals. As can be seen from figures 2, 5 and 6 (the latter two figures showing in perspective the connecting piece 6 as a separate constructional element), the connecting piece 6 is provided with an opening 10 in order to allow a relative movement of the wiper blade 2 along the strips 4 inside the connecting piece 6, so that said connecting piece 6 does not block the wiper blade 2 during use. The connecting pieces 6 are made of one piece of plastic.

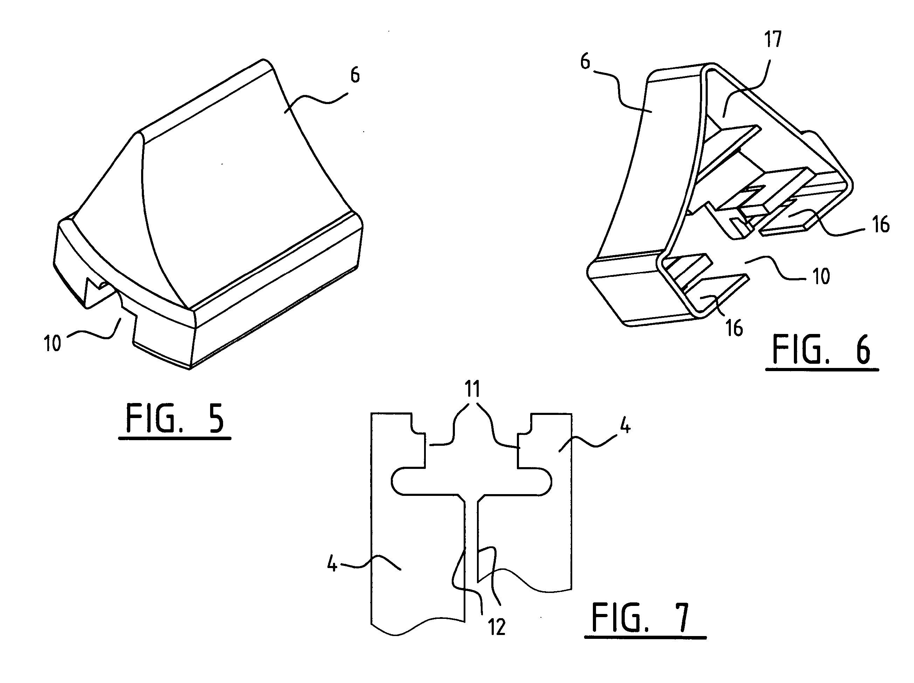

With reference to figure 7 relating to a top view of the strips 4 as such, said strips 4 are each provided with a protrusion 11 extending laterally from a longitudinal interior edge 12 of the strips 4. When a connecting piece 6 is slidably mounted onto the neighbouring ends 5 of the strips 4, a snap or clicking connection is realized, wherein the protrusions 11 are snapped or clicked between stops 13 ("notches 13") inside the connecting piece 6. Each protrusion 11 rests in a small groove 14 between these opposing stops 13. Accordingly, the strips 4 are blocked against any movement in longitudinal direction with respect to the connecting pieces 6. Each connecting piece 6 is also provided with two engaging members 15 made integral therewith, wherein said engaging members 15 engage around the strips 4 so as to form a groove 16 for sliding the strips 4 therein. Said engaging members 15 ensure that the strips 4 are blocked against any movement in transversal direction with respect to the connecting pieces 6. Each connecting piece 6 has a cavity 17 to accomodate the free end of the spoiler 9.

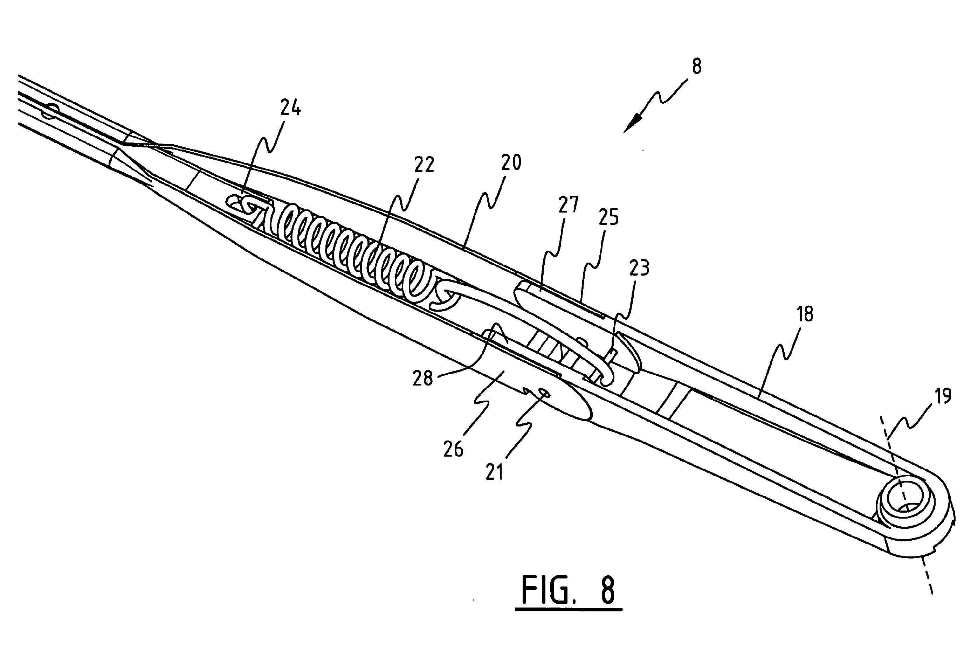

As illustrated in figures 8 through 11 the windscreen wiper arm 8 according to the invention comprises a plastic mounting head 18 which can be fixed for rotation to a shaft 19 driven, via a mechanism not illustrated, by a small motor. Said windscreen wiper arm 8 further comprises a plastic arm member 20 supported by the mounting head 18, wherein said arm member 20 in turn supports the wiperblade 2 with the help of the connecting device 7, as illustrated in figure 1. The arm member 20 is pivotally connected to the mounting head 18 by means of a pivot pin 21. A spring 22 is hooked with its first end on a pin 23 on the mounting head 18 and with its second end on to a part 24 of the arm member 20 in order to ensure that the arm member 20 and thus the wiper blade 2 connected thereto is pressed onto a windscreen to be wiped. In use, the shaft 19 rotates alternately in a clockwise and in a counterclockwise sense carrying the mounting head 18 into rotation also, which in turn draws the arm member 20 into rotation and by means of the connecting device 7 moves the wiper blade 2.

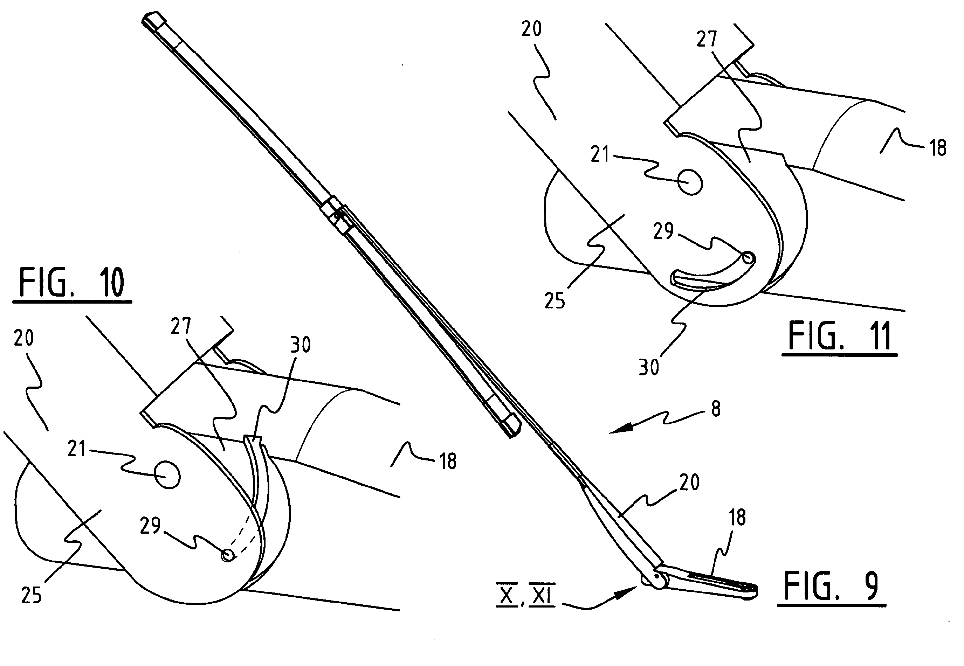

As illustrated, the arm member 20 has a substantially U-shaped cross-section near said pivot pin 21 comprising two side walls 25,26, wherein a part of the mounting head 18 extends between the side walls 25,26 and beyond said pivot pin 21. Said part is provided with opposite abutting surfaces 27,28 for abutting against the side walls 25,26. A cylindrical protrusion 29 extends laterally inwardly from the side wall 25 into a guiding groove 30 being provided on the abutting surface 27 abutting against the side wall 25. The guiding groove has a shape of a part of a circle, for example a quarter of a half of a circle. When the arm member 20 is pivoted relative to the mounting head 18 from a first position facing towards a windscreen to be wiped (that is a wiping postion, see figure 1) to a second position facing away from a windscreen to be wiped (that is a mounting, cleaning and/or repair position, for example, see figure 9), the protrusion 29 is guided by the guiding groove 30 until a maximum pivot angle is reached. In that case, the protrusion 29 is stopped/blocked by a wall of the guiding groove 30, so that the arm member 20 cannot be pivoted vis-à-vis the mounting head 18 beyond said maximum pivot angle. It will be appreciated that in addition a guiding groove may also be provided on the abutting surface 28 cooperating with a cylindrical protrusion extending laterally inwardly from the side wall 26. In another preferred embodiment a guiding groove 30 is provided on one or both side wall(s) 25,26, whereas a cylindrical protrusion 29 cooperating therewith is present on one or both abutting surface(s) 27,28 (figure 11).

The invention is not restricted to the embodiment shown, but extends alsoto other embodiments falling within the scopeof the appended claims.

## Claims

1. A windscreen wiper arm (8), particularly for automobiles, comprising a mounting head (18) mountable on a drive shaft (19) and an arm member (20) pivotally connected to the mounting head (18) by means of a pivot pin (21), wherein the arm member (20) has a substantially U-shaped cross-section near said pivot pin (21) comprising two side walls (25, 26), wherein a part of the mounting head (18) extends between the side walls (25, 26) and beyond said pivot pin (21), **characterized in that** protrusion/groove means (29, 30) are provided on said part (18) of the mounting head and said side walls (25, 26) for limiting a pivot angle of the arm member (20), wherein the protrusion/groove means (29, 30) comprise at least one curved guiding groove (30) and at least one protrusion (29) cooperating with said groove (30).

2. A windscreen wiper arm according to claim 1, wherein said protrusion (29) is movable in said groove (30) between a first position corresponding with a wiping position of the arm member (20) and a second position corresponding with a mounting position of the wiping arm member (20).

3. A windscreen wiper arm according to claim 1 or 2, wherein said part (18) of the mounting head is provided with opposite abutting surfaces for abutting against the side walls (25, 26) of the arm member and wherein said laterally inwardly from one of the protrusion (29) extends laterally inwardly from one of the side walls (25,26) into said groove (30) being provided on one of the abutting surfaces abutting against that respective side wall (25, 26).

4. A windscreen wiper arm according to claim 1 or 2, wherein said part (18) of the mounting head is provided with opposite abutting surfaces for abutting against the side walls (25, 26) of the arm member and wherein said protrusion (19) extends laterally outwardly from one of the abutting surfaces into said groove (30) being provided on one of the side walls (25, 26) abutting against that respective abutting surface.

5. A windscreen wiper arm according to any of the preceding claims 1 through 4, wherein said groove (30) extends along a part of a circle.

6. A windscreen wiper arm according to any of the preceding claims 1 through 5, wherein the arm member (20) is made of a plastic material.

7. A windscreen wiper device comprising a windscreen wiper arm (8) according to any of the preceding claims 1 through 6.

8. A windscreen wiper device according to claim 7, wherein it comprises an elastic, elongated carrier element, as well as an elongated wiper blade (2) of a flexible material, which can be placed in abutment with a windscreen to be wiped, which wiper blade (2) includes opposing longitudinal grooves (3) on its longitudinal sides, in which grooves spaced-apart longitudinal strips (4) of the carrier element are disposed, wherein neighbouring ends (5) of said longitudinal strips (4) are interconnected by a respectve connecting piece (6), which windscreen wiper device comprises a connecting device (7) for the windscreen wiper arm (8) according to any of the preceding claims 1 through 6.

9. Method for manufacturing a windscreen wiper arm, particularly for automobiles, comprising a mounting head (18) mountable on a drive shaft (19) and an arm member (20) pivotally connected to the mounting head (18) by means of a pivot pin (21), wherein the arm member (20) has a substantially U-shaped cross-section near said pivot pin (21) comprising two side walls (25, 26), wherein a part of the mounting head (18) extends between the side walls (25, 26) and beyond said pivot pin (21), **characterized in that** protrusion/groove means (29, 30) are provided on said part (18) of the mounting head and said side walls (25, 26) for limiting a pivot angle of the arm member (20), wherein the protrusion/groove means (29, 30) are provided with at least one curved guiding groove (30) and at least one protrusion (29) cooperating with said groove (30).

## Patentansprüche

1. Scheibenwischerarm (8), insbesondere für Automobile, mit einem Befestigungskopf (18), der an einer Antriebswelle (19) befestigbar ist, und einem Armelement (20), das schwenkbar mit dem Befestigungskopf (18) mit Hilfe eines Drehzapfens (21) verbunden ist, wobei das Armelement (20) einen im wesentlichen U-förmigen Querschnitt nahe des Drehzapfens (21) mit zwei Seitenwänden (25, 26) aufweist, wobei sich ein Teil des Befestigungskopfes (18) zwischen den Seitenwänden (25, 26) und über den Drehzapfen (21) hinaus erstreckt,
**dadurch gekennzeichnet, dass**
Vorsprungs/Nut-Mittel (29, 30) an dem Teil (18) des Befestigungskopfes und diese Seitenwände (25, 26) zum Begrenzen eines Schwenkwinkels des Armelementes (20) vorgesehen sind, wobei die Vorsprungs/Nut-Mittel (29, 30) wenigstens eine gebogene Führungsnut (30) und wenigstens einen Vorsprung (29), der mit der Nut (30) zusammenwirkt, umfassen.

2. Scheibenwischerarm nach Anspruch 1, wobei der Vorsprung (29) in der Nut (30) zwischen einer ersten Position, die einer Wischposition des Armelementes (20) entspricht, und einer zweiten Position, die einer Befestigungsposition des Wischarmelementes (20) entspricht, bewegbar ist.

3. Scheibenwischerarm nach Anspruch 1 oder 2, wobei das Teil (18) des Befestigungskopfes mit gegenüberliegenden anstoßenden Flächen zum Anstoßen gegen die Seitenwände (25, 26) des Armelementes versehen ist, und wobei sich der Vorsprung (29) lateral einwärts von einer der Seitenwände (25, 26) in die Nut (30) erstreckt, die auf einer der anstoßenden Flächen, die gegen die entsprechende Seitenwand (25, 26) anstößt, vorgesehen ist.

4. Scheibenwischerarm nach Anspruch 1 oder 2, wobei das Teil (18) des Befestigungskopfes mit gegenüberliegenden anstoßenden Flächen zum Anstoßen gegen die Seitenwände (25, 26) des Armelementes versehen ist, und wobei sich der Vorsprung (29) lateral auswärts von einer der anstoßenden Flächen in die Nut (30) erstreckt, die auf einer der Seitenwände (25, 26), die gegen die entsprechende anstoßende Fläche stößt, vorgesehen ist.

5. Scheibenwischerarm nach einem der vorhergehenden Ansprüche 1 bis 4, wobei sich die Nut (30) entlang eines Teilkreises erstreckt.

6. Scheibenwischerarm nach einem der vorhergehenden Ansprüche 1 bis 5, wobei das Armelement (20) aus einem Kunststoffmaterial hergestellt ist.

7. Scheibenwischervorrichtung umfassend einen Scheibenwischerarm (8) gemäß einem der vorhergehenden Ansprüche 1 bis 6.

8. Scheibenwischervorrichtung nach Anspruch 7, die ein elastisches, längliches Trägerelement sowie ein längliches Wischblatt (2) aus einem flexiblen Material aufweist, das anstoßend an eine zu wischende Windschutzscheibe angeordnet werden kann, wobei das Wischblatt (2) gegenüberliegende Längsnuten (3) an seinen Längsseiten umfasst, in denen beabstandete längliche Streifen (4) des Trägerelementes angeordnet sind, wobei benachbarte Enden (5) der Längsstreifen (4) durch ein entsprechendes Verbindungsteil (6) miteinander verbunden sind, wobei die Scheibenwischervorrichtung eine Verbindungsvorrichtung (7) für den Scheibenwischerarm (8) gemäß einem der vorhergehenden Ansprüche 1 bis 6 aufweist.

9. Verfahren zum Herstellen eines Scheibenwischerarms, insbesondere für Automobile, mit einem Befestigungskopf (18), der an einer Antriebswelle (19) befestigbar ist, und einem Armelement (20), das schwenkbar mit dem Befestigungskopf (18) mit Hilfe eines Drehzapfens (21) verbunden ist, wobei das Armelement (20) einen im Wesentlichen U-förmigen Querschnitt nahe des Drehzapfens (21) mit zwei Seitenwänden (25, 26) aufweist, wobei sich ein Teil des Befestigungskopfes (18) zwischen den Seitenwänden (25, 26) und über den Schwenkzapfen (21) hinaus erstreckt,
**dadurch gekennzeichnet, dass**
Vorsprungs/Nut-Mittel (29,30) an dem Teil (18) des Befestigungskopfes und die Seitenwände (25, 26) zum Begrenzen eines Schwenkwinkels des Armelementes (20) vorgesehen sind, wobei die Vorsprungs/Nut-Mittel (29, 30) mit wenigstens einer gebogenen Führungsnut (30) und wenigstens einem mit der Nut (30) zusammenwirkenden Vorsprung (29) versehen sind.

## Revendications

1. Bras d'essuie-glace (8), en particulier pour des automobiles, comprenant une tête de montage (18) montable sur un arbre d'entraînement (19) et un élément de bras (20) relié à pivotement à la tête de montage (18) au moyen d'un axe d'articulation (21), dans lequel l'élément de bras (20) possède une section essentiellement en forme de U à proximité dudit axe d'articulation (21) comprenant deux parois latérales (25, 26), dans lequel une partie de la tête de montage (18) s'étend entre les parois latérales (25, 26) et au-delà dudit axe d'articulation (21), **caractérisé en ce que** des moyens de saillie/rainure (29, 30) sont prévus sur ladite partie de la tête de montage (18) et lesdites parois latérales (25, 26) pour limiter un angle de pivot de l'élément de bras (20), et les moyens de saillie/rainure (29, 30) comprennent au moins une rainure de guidage courbe (30) et au moins une saillie (29) coopérant avec ladite rainure (30).

2. Bras d'essuie-glace selon la revendication 1, dans lequel ladite saillie (29) est mobile dans ladite rainure (30) entre une première position correspondant à la position d'essuyage de l'élément de bras (20) et une deuxième position correspondant à une position de montage de l'élément de bras d'essuyage (20).

3. Bras d'essuie-glace selon la revendication 1 ou 2, dans lequel ladite partie de la tête de montage (18) est prévue avec des surfaces d'aboutement opposées pour abouter contre les parois latérales (25, 26) de l'élément de bras et dans lequel ladite saillie (29) s'étend latéralement vers l'intérieur à partir d'une des parois latérales (25, 26) dans ladite rainure (30) prévue sur l'une des surfaces d'aboutement aboutant contre cette paroi latérale respective (25, 26).

4. Bras d'essuie-glace selon la revendication 1 ou 2, dans lequel ladite partie de la tête de montage (18) est prévue avec des surfaces d'aboutement opposées pour abouter contre les parois latérales (25, 26) de l'élément de bras et dans lequel ladite saillie (29) s'étend latéralement vers l'extérieur à partir de l'une des surfaces d'aboutement dans ladite rainure (30) prévue sur l'une des parois latérales (25, 26) aboutant contre cette surface d'aboutement respective.

5. Bras d'essuie-glace selon l'une quelconque des revendications précédentes 1 à 4, dans lequel ladite rainure (30) s'étend le long d'une partie de cercle.

6. Bras d'essuie-glace selon l'une quelconque des revendications précédentes 1 à 5, dans lequel l'élément de bras (20) est fait d'un matériau plastique.

7. Dispositif d'essuie-glace comprenant un bras d'essuie-glace (8) selon l'une quelconque des revendications précédentes 1 à 6.

8. Dispositif d'essuie-glace selon la revendication 7, dans lequel est compris un élément de support allongé élastique, ainsi qu'un balai d'essuie-glace allongé (2) d'un matériau flexible, qui peut être placé en aboutement avec un pare-brise à essuyer, lequel balai d'essuie-glace (2) comprend des rainures longitudinales opposées (3) sur ses côtés longitudinaux, dans lesquelles rainures sont disposées des bandes longitudinales espacées (4) de l'élément de support, dans lequel des extrémités adjacentes (5) desdites bandes longitudinales (4) sont reliées par une pièce de raccord respective (6), lequel dispositif d'essuie-glace comprend un dispositif de raccord (7) pour le bras d'essuie-glace (8) selon l'une quelconque des revendications précédentes 1 à 6.

9. Procédé de fabrication d'un bras d'essuie-glace, en particulier pour des automobiles, comprenant une tête de montage (18) montable sur un arbre d'entraînement (19) et un élément de bras (20) relié à pivotement à la tête de montage (18) au moyen d'un axe d'articulation (21), dans lequel l'élément de bras (20) possède une section essentiellement en forme de U à proximité dudit axe d'articulation (21) comprenant deux parois latérales (25, 26), dans lequel une partie de la tête de montage (18) s'étend entre les parois latérales (25, 26) et au-delà de l'axe d'articulation (21), **caractérisé en ce que** des moyens de saillie/rainure (29, 30) sont prévus sur ladite partie de la tête de montage (18) et lesdites parois latérales (25, 26) pour limiter un angle de pivot de l'élément de bras (20), et les moyens de saillie/rainure (29,30) sont prévus avec au moins une rainure de guidage courbe (30) et au moins une saillie (29) coopérant avec ladite rainure (30).
